# EUROPEAN PATENT APPLICATION

(11) **EP 1 502 510 A1**
(43) Date of publication of application: **02.02.2005**
(21) Application number: 03079093.5
(22) Date of filing: 16.12.2003
(51) Int. Cl.: A23L 1/052, A23L 1/0532, A23C 9/154, A21D 13/08, A23L 1/325, A23L 1/187, A23C 19/09

(54) **Method for preparing a gelled food product**

(30) Priority: 27.05.2003 EP 03253320; 27.05.2003 EP 03253321; 27.05.2003 EP 03253322
(71) Applicant: UNILEVER N.V., 3013 AL Rotterdam (NL); UNILEVER PLC, London EC4P 4BQ (GB)
(72) Inventor: Blindt, Renoo Avinash, Bedford Bedfordshire MK44 1LQ (GB); Clark, Allan Hugh, Bedford Bedfordshire MK44 1LQ (GB); Elliott, Bronwyn, Bedford Bedfordshire MK44 1LQ (GB); Foster, Timothy John, 3133 AT Vlaardingen (NL); Norton, Ian Timothy, Bedford Bedfordshire MK44 1LQ (GB)
(74) Representative: Rots, Maria Johanna Francisca

(57) **Abstract**

A gelled food product is prepared by opening a closed container of thermo-reversible gel(A) that is based on polysaccharide gelling agent, heating gel (A) to a temperature of at least 60°C, combining the gel (A) with at least one taste or flavour imparting food component before, during or after the heating, to provide a combined gel composition (B) that comprises at least 1 wt% protein, such that the gel (A) constitutes 50-98 wt% of the composition (B), and allowing the combined gel composition (B) to set in a mould.

## Description

The invention relates to a method for preparing a gelled food product. Gelled food products such as cheesecake, gelled desserts, savory pies and quiches, can take a long time to prepare and require considerable skill to get a good product. Such products are often made with gelatin. To make cheesecake for example, according to a common recipe, the cook has to dissolve gelatin, ensure that no lumps are formed and/or take care to avoid overheating, dissolve or disperse cream cheese etc. The resulting warm mixture is poured onto a biscuit base and the product is put in a cool place to allow the gelatin to set. The preparation time can be as long as 45 minutes. The time required for the gel to set to get the product suitable for consumption is typically as long as 4 or 5 hours. Because of this, for use in for example canteens, restaurants and cafe's, such products are often prepared the day before. This can make planning difficult and may lead to shortage of products or high waste.

GB 2 128 871 describes polysaccharide gums that are marketed in the form of an aqueous gel requiring further dilution before use and the addition of other ingredients such as flavors, sugar and the like in flans and cakes and other baked goods. This is then warmed to melt the gel and applied for example by pouring or brushing and sets on cooling. GB 2 128 871 also describes a bakers' jelly that comprises a pseudo-plastic composition and has a high sugar content. The product is a mobile liquid which on heating to 80 °C sets on cooling to a firm jelly. The piping gels described in GB 2 128 871 can e.g. be used to decorate cakes and the like. The materials can also be used e.g. as flan jelly.

QimiQ ® is a gelled product made from skimmed milk, dairy cream and gelatin. It can be used for preparing e.g. creams, mousse, gateaux fillings, spreads and dips. The QimiQ is whisked and mixed with other components. It avoids the use of gelatin powder and thereby allows the preparation time to be reduced. WO 02/069 726 describes an alternative to QimiQ that avoids the use of gelatin. The product is designed to have the same functionality as QimiQ, i.e. to be structure reversible, which is intended to mean that the milk product has a gel structure that forms anew if it has been disturbed by shear e.g. by stirring. When using QimiQ or the alternative described in WO 02/069 726, after mixing the ingredients together and leaving the composition at quiescent conditions at ambient temperature or in the refrigerator, the structure becomes more firm only slowly.

Sheared gels, also referred to as microgels, have been described in the literature. EP 355 908 describes preparations constituting thermo-reversible sheared gels and their preparation. The resulting product is a fluid which can be stored indefinitely in its mobile state but which can be returned to its normal more rigid state by heating through the transition temperature of said composition, whereafter the heated solution will form a normal gel on cooling under quiescent conditions. EP 432 835 describes sheared gel preparations that are chemically set. Preparations constituting sheared gels or microgels are also described in US 5 338 561, US 5 508 055, US 5 593 716 and GB 2 128 871. The preparations e.g. constitute dressings, creams, sauces or gravies or are used in the preparation of such products.

EP 1 287 748 describes a liquid pastry filling comparable to so-called yellow baker's cream, that can be filled into unbaked, shaped dough e.g. in a pastry factory. The filled dough can then be baked to obtain the consumable pastry. After the baking process the filling has a firm structure. The liquid food is based on a combination of thermo-reversible gel forming hydrocolloid, hydrocolloid based on cellulose derivative and starch. The food is said to withstand baking and does not boil over during baking because the viscosity is made so high that no real boiling is involved. This is achieved by the use of cellulose derivative that thickens at high temperature. The liquid food can also be used as such, e.g. at home by the consumer. Heating can then be done in a microwave.

We have found that the preparation of gelled food products can be improved and the above-described problems can at least partially be solved. According to our method, gelled food products can be prepared quickly and without requiring much skill. The product is ready for consumption quickly, which facilitates planning and reduces the risk of out of stock situations and of product wastage. Syneresis problems can be reduced or prevented. The products can have good organoleptic quality. The present method facilitates obtaining gelled food products of consistent, high quality. The method allows the preparation of a wide range of gelled food products from a relatively small number of starting materials.

Accordingly the present invention provides a method for preparing a gelled food product comprising the steps of
(a) opening a closed container of thermo-reversible gel(A) that is based on polysaccharide gelling agent,
(b) heating gel (A) to a temperature of at least 60°C,
(c) combining the gel (A) with at least one taste or flavour imparting food component before, during or after the heating in step (b), to provide a combined gel composition (B) that comprises at least 1 wt% protein, such that the gel (A) constitutes 50-98 wt% of the composition (B), and
(d) allowing the combined gel composition (B) to set in a mould.

The present invention can be put into practice using a semi-finished product comprising a closed container that contains thermo-reversible gel (A) that is based on polysaccharide gelling agent and that is suitable for use in the present method, which container is provided with instructions to the user to apply the steps of
(I) heating the gel (A) to a temperature of at least 60°C,
(II) combining the gel (A) with at least one taste or flavour imparting food component before, during or after the heating in step (I), to provide a combined gel composition (B) that comprises at least 1 wt% protein, such that the gel (A) constitutes 50-98 wt% of the composition (B), and
(III) allowing the combined gel composition (B) to set. More specifically, the instructions may advise the user to allow the composition (B) to set in a mould.

The gel (A) used may contain e.g. cream cheese and cream dispersed therein. Cheesecake can be prepared by opening a closed container of gel (A), heating some of the gel (A) in a microwave oven to, for example, 80°C, mixing some strawberry puree into it to provide the combined gel composition (B), pouring the mix in a biscuit base and allowing the combined gel composition (B) to set. The composition (B) can be allowed to set by keeping it e.g. at ambient temperature or in a refrigerator. The time required for the product to be ready for consumption will depend on the amount. For example, small cheesecakes to be used as individual desserts can be ready for consumption 10 minutes after the heating. Preferably the combined gel composition (B) is allowed to set under quiescent conditions.

A gelled food product is a product suitable for human consumption, of which at least a substantial part has a macroscopic gel structure. This part is called the gelled part of the gelled food product. Typically this gelled part of the gelled food product constitutes at least 30 vol%, preferably at least 40 vol%, especially at least 50 vol% of the product. Examples of such products can include cakes, pies, quiches, pastries and chocolate baskets that have e.g. a pastry, biscuit, chocolate or meringue base and a gelled composition on top. Alternatively, the mould may consist of vegetable material e.g. a half pepper or shaped vine leaves and the like. The gelled food product may also consist entirely or very largely of the part with the macroscopic gel structure, as can be the case for example for desserts, mousses, terrines, pate's and the like. They may optionally be decorated with e.g. fruit, whipped cream, chocolate flakes and/or sauce. The expression gelled food product excludes normal flans and the like. A typical flan only has a minor part with a macroscopic gel structure. The thin layer of jelly over the fruits and sponge or pastry base is clearly less than 30 vol% of the food product.

A thermo-reversible gel is a gel based on a thermo-reversible gelling agent, i.e. a gelling agent that does not form a gel structure above a certain temperature but will do so at lower temperature provided sufficient gelling agent is present, i.e. at a concentration above the critical concentration. The critical concentration of a gelling agent in a particular composition can be calculated from measurement of the storage modulus of a series of samples containing different concentrations of gelling agent as described in Br. Polymer J. 17, (1985), 164.

In the present method at least one taste or flavour imparting food component is combined with gel (A), e.g. by mixing them. This may be done at ambient temperature before heating is applied, e.g. using a food processor or hand mixer. However, it may be convenient to first heat gel (A). This will soften the gel and partially or wholly melt it. It may then be easier to incorporate the one or more food components, e.g. by stirring with a fork or a hand whisk. If so desired, further heating can be applied before the combined gel composition is allowed to set.

The melting and setting of gels does not happen instantaneously but takes some time. This can be used, if so desired, to speed up the cooling by stirring a food component of e.g. ambient temperature into gel (A) after it has been heated and thereafter transferring it into the mould. If this is done relatively quickly, the food component can cause the temperature of composition (B) to reduce to below the setting temperature while still obtaining a properly set gel.

The composition that constitutes the gel (A) constitutes 50-98 wt% of the gelled part of the gelled food product. More preferably it constitutes 70-95 wt% of the gelled part of the gelled food product. One or more taste or flavour imparting food components are combined with gel (A) before, during or after the heating, but before setting of the combined gel composition (B). Other food components may be incorporated as well. To prepare a quiche, for example, bouillon concentrate or pieces of meat or vegetables may be mixed with gel (A), or for a dessert sugar, cream, preserved fruit, chocolate flakes etc. may be stirred in. Preferably, however, in the present method gel (A) includes all the materials that are to constitute the gelled part of the gelled food product to be prepared except for food components that have a pronounced influence on the taste or flavor profile of the food product. Incorporation of such characteristic food components allows a variety of notably different gelled food products to be prepared from a single gel (A) product. Examples of taste or flavor imparting food components are pieces of fresh or canned fruit, spinach leaves, pieces of seeds, crushed nuts, chocolate powder or chips, fish, sugar or sweetener, etc. However, the amount of such food component combined with the gel (A) should not exceed 50 wt% of the gelled part of the food product, more preferably it is 5-30 wt% of the gelled part of the gelled food product.

In a preferred embodiment, the gel (A) in the present method is a sheared gel, e.g. as described in EP 355 908 or EP 432 835. If a thermo-reversible gel, irrespective of whether it is a "normal" gel or a sheared gel, is heated to above the transition temperature and then cooled to e.g. ambient or refrigerator temperature under quiescent conditions a solid gel is obtained. Quiescent conditions means the absence of any agitation. Agitation encompasses actions such as shearing, stirring and shaking.

The gel (A) may, for example, be a gelled block or a sheared gel. In an embodiment of the invention, the gel (A) may have a "borderline" structure, e.g. be a weakly gelled block. This may for example be achieved by using a relatively low amount of gelling agent. Alternatively, in a preferred embodiment, it may be achieved by heating the composition and subsequently applying shear during the initial cooling stage but not during the entire cooling stage. E.g. shear could be applied until the temperature has been reduced to 25°C while further cooling is caused to occur under quiescent conditions. The resulting product may macroscopically a weakly gelled block structure with internally a sheared gel type structure. Such a product can be attractive for ease of application, a pleasant appearance and/or good organoleptic properties.

The transition temperature of a thermo-reversible gel is the temperature at which, upon slow temperature increase, the ordered form, be it of microscopical or macroscopical size, has disappeared completely. The transition temperature can be measured by means of differential scanning calorimetry.

The thermo-reversible gel (A) is based on polysaccharide gelling agent, preferably non-starch polysaccharide gelling agent. Gelatin, a protein, is not suitable as the primary gelling agent in the present method. Gelatin gels set too slowly. However, the presence of small amounts of gelatin can be tolerated in gel (A) and combined gel composition (B).

As described above, preferably, the combined gel composition (B) consists largely of the composition constituting gel (A) and the properties of the composition (B) are predominantly determined by those of gel (A). If, as is preferred, only a minor amount of taste or flavour imparting food component is combined with gel (A), then it can easily be ensured that composition (B) comprises at least 1 wt% protein by including an adequate amount of protein in gel (A). Preferably gel (A) includes at least 1 wt% protein, more preferably at least 1.5 wt% protein.

The present method offers several benefits in combination. Gel (A) is easy to use. Cumbersome dissolution of powdered gelling agents is avoided. There is no need to whisk the composition to prevent the occurrence of lumps in the gelled food product. While gel (A) is at elevated temperature, it will typically be relatively fluid and any food components to be incorporated can easily be homogeneously dispersed through the gel composition. The combined gel composition (B) can set quickly thereby allowing the gelled food product to be ready for consumption quickly, which facilitates planning. We also found that good organoleptic quality is readily obtainable. The texture of the product in the mouth as well as the taste and flavor of the gelled food product can be good. With prior art products it has often been found that the mouthfeel is not as good as desired, especially with products that can set quickly.

We do not wish to be bound by theory but we believe that the combination of the polysaccharide gelling agent and the application of a heat treatment to at least 60°C, rather than e.g. a restructuring after disturbance by shear, allows the gel to set quickly, while the presence of the protein prevents the development of poor mouthfeel, a phenomenon often observed for fast setting gels. In a particularly preferred embodiment, the protein is globular protein. The globular protein is preferably dairy protein, vegetable protein or a combination thereof. Preferred vegetable globular proteins are soy protein and pea protein and combinations thereof. Most preferably the globular protein is dairy protein, the protein of white cheese, e.g. cream cheese or cream cheese alternative being particularly preferred. Further information on globular proteins is given in Food Science, Nutrition and Health 5^{th} ed, Brian Fox and Allan Cameron, (1989), publisher Edward Arnold. The amount of protein in the combined gel (B) is preferably 1.5-12 wt%, more preferably 2-6 wt%. Suitably part or all of the protein can be provided by the presence of protein in gel (A). The amount of protein in gel (A) is preferably 2-12 wt%, more preferably 3-8 wt%.

Preferably gel (A) is substantially free from kappa and iota carrageenan; especially if gel (A) is not a sheared gel. By "substantially free" is meant that kappa and iota carrageenan are preferably not present in an amount that equals or exceeds their critical concentration. More preferably gel (A) does not contain kappa or iota carrageenan at all unless gel (A) is a sheared gel. Similarly, composition (B) is preferably substantially free, more preferably entirely free from kappa and iota carrageenan.

The pH of gel (A) preferably is below 6, more preferably the pH is 4-5.5. Similarly, the pH of composition (B) is preferably below 6, more preferably it is 4-5.5.

Gel systems often suffer from syneresis. This may particularly be the case with gel systems containing casein. Syneresis issues might arise with respect to the gel (A) and with respect to the gelled food product prepared. We have found that with our invention syneresis problems can be reduced or can even be avoided completely. In particular, we have found benefits with respect to syneresis when using sheared gel as gel (A), when substantially avoiding in gel (A) and / or in composition (B) the presence of kappa and iota carrageenan and when applying for gel (A) and / or for composition (B) a pH below 6, in particular a pH of 4-5.5. Especially beneficial results can be obtained when applying two or more of these measures in combination.

Preferably gel (A) is prepared with a thermo-reversible non-starch polysaccharide gelling agent selected from the group consisting of agar, gellan, agarose, furcelleran, a combination of xanthan gum and locust bean gum, a combination of xanthan gum and konjac flour and combinations of two or more thereof. The most preferred gelling agent is agar.

If gel (A) is based on a cation sensitive gelling agent, cations can be incorporated in gel (A), e.g. by including sodium, potassium and / or calcium salt, e.g. to raise the gel strength or to cause the gel to set faster. However, salt can be included as a taste or flavour imparting food component. In that manner, the combined gel composition (B) can be caused to set as a relatively strong gel fairly quickly even though gel (A) may be a weaker gel.

The amount of polysaccharide gelling agent in gel (A) typically is between 0.1 and 5 wt%, preferably between 0.2 and 3 wt%. The optimum amount depends on the composition and the type of gelling agent used. The amount should be above the critical concentration.

We have found that a major part of the combined gel composition (B) should preferably consist of water and fat. The amount of water and fat combined in composition (B) is preferably 60-99 wt%, more preferably 70-98 wt%. The water content of composition (B) is preferably 45-98 wt%, more preferably 50-90 wt%. Similarly, the combined amount of water and fat in gel (A) is preferably 60-99 wt%, more preferably 70-98 wt%. The water content of gel (A) is preferably 45-98 wt%, more preferably 50-90 wt%. Water can be incorporated in gel (A) as such. However, part or all of the water in gel (A) may originate for example from cream, milk, cream cheese and / or alternatives therefore that have been included in the gel (A). Similarly, such components may be mixed with gel (A) in the present method, thereby contributing to the water content of the composition (B). However, the incorporation of such components in composition (B) other than via gel (A) is not preferred.

Gel (A) can be prepared in a manner known perse. For example sheared gel can be made using a Votator ® e.g. as described in EP 355 908. After its preparation, the gel (A) can be filled into containers to obtain a semi-finished product. Typically, after filling gel (A) in the containers, the containers are closed to make them suitable for transportation, prevent contamination and ensure the shelflife of the product. The instructions to the user can e.g. be provided as a leaflet with the container, be printed on a label which is glued onto the container or be printed directly onto the material that the container is made of. The instructions to the user can direct the user how the semi-finished product can be used according to the present method for preparing gelled food products.

To prepare the gelled food product a closed container of gel (A) is opened and at least a portion of the gel (A) from the container is heated to a temperature of at least 60°C. Opening the closed container of gel (A) may involve for example puncturing the lid or transferring gel (A) to another container, e.g. a kitchen bowl, e.g. by pouring or via a tap. As a minimum for opening the container it should be ensured that gel (A) can safely be heated without the risk of unacceptable pressure development. Heating can be done e.g. on a hot plate. Preferably a heating method is chosen that heats gel (A) in a relatively uniform manner. A preferred way of heating is in a microwave oven. Other methods can be employed as well. If the heating is not relatively homogeneously throughout the composition, then suitably the composition can be stirred or mixed to avoid local overheating.

We have found that the gel composition should preferably not be heated to a temperature above 95°C. This can also prevent boiling over of the composition, which may otherwise interfere with the desired easy and rapid preparation of the gelled food product.

Preferably gel (A) is heated to a temperature of 60-95°C. As mentioned above, gel melting and gel setting are not instantaneous processes and preferably the properties of composition (B) are largely determined by gel (A). It is not necessary, we found, for gel (A) to be wholly molten, i.e. all microscopic and macroscopic gel structure to have disappeared. Correspondingly, it is not necessary for all potentially available gelling molecules to take part in the macroscopic gel structure that is built when combined gel composition (B) sets. It is usually sufficient if the resulting structure has lost its mobility and can be cut without showing flow.

In practice, a suitable heat treatment appropriate for a given amount of a particular gel (A) to be combined with a given amount and type of food component, with a particular heating device can readily be determined by trial and error. If the set gel composition (B) obtained is found to be relatively tough in the mouth while gel (A) had largely molten during the heat treatment or if the composition begins to boil over during the heating, then a shorter heat treatment or a treatment at a lower heating capacity or a lower temperature should be tried.

If it is found that the setting of the gel takes too long or setting does not occur at all, then a longer heat treatment or a heat treatment at a higher capacity or a higher temperature should be applied. A suitable heat treatment can usually most easily be found if the food component or components is / are combined with gel (A) before the heat treatment is completed. A disadvantage of this approach may however be that this is not typically the way to obtain the shortest possible gel setting time.

We found in practice that very good results can usually be obtained if gel (A) is heated to a temperature of 65-90°C, most preferably 70-85°C and the heat treatment is stopped as soon as the target temperature is reached. This is particularly the case if the one or more food components are combined with gel (A) before the intended heating temperature has been reached, i.e. if combined gel composition (B) is heated to such temperature and the treatment is stopped as soon as the target temperature has been reached.

In a preferred embodiment, before the heating, gel (A) is removed from the pack and before, during or after the heating, gel (A) is combined with one or more food components and the combined gel composition (B) is put into a mould. The gel is then allowed to set, preferably under quiescent conditions. Irrespective of whether gel (A) is heated in its original pack or in e.g. a kitchen bowl, preferably, the combined gel composition (B) is transferred into the mould after the heating. In this manner heating of the mould is avoided and accordingly setting of the gel can occur faster. The mould may for example be a baking tin or a flan ring on a baking sheet. The mould may also be an edible mould, e.g. made from pastry, baked dough, pavlova, meringue, etc. The mould may also be partially edible, e.g. be constituted by a holding device like a flan ring on a baking sheet provided with an edible base, e.g. a biscuit base at the bottom. The combined gel composition may be poured into the mould before or after the heating. If so desired, gel (A) may be put into a beaker or other container, heated and combined with one or more food components therein, and thereafter poured or otherwise transferred into the mould. In a preferred embodiment, the mould in which the gel composition (B) is allowed to set is an edible mould or a holding device that contains an edible base.

The present method is also very suitable to prepare gelled food products containing two or more gelled layers, the layers having different compositions. Such layers preferably are made to be easily distinguishable from each other. For example, separate bowls with gel (A) can be combined with taste or flavour imparting food components with different colors, e.g. vanilla/sugar, chocolate and strawberry, and heated to provide several combined gel compositions (B) with different taste, flavor and color. To prepare a gelled food product with more than one gelled layer, such a heated composition (B) can be put into a mould and be allowed to set under quiescent conditions. Subsequently, a next heated composition (B) is poured onto the first layer and allowed to set under quiescent conditions. If so desired further layers can be added in a corresponding manner.

Sugar may be present in the gel (A) or be combined therewith before the heated composition (B) is allowed to set in the mould, preferably under quiescent conditions. However, the use of high amounts of sugars is preferably avoided in the present method and consequently preferably also in the semi-finished product. We have found that sugars may interfere with the setting of the gel. Therefore, the gel (A) and the combined gel composition (B) preferably do not contain more than 35 wt% of mono- and disaccharides. More preferably the amount of mono-and disaccharides in gel (A) and in the combined gel composition (B) is less than 25 wt%, especially less than 15 wt%.

After the heating, and if applicable, transferring the composition into the mould, the gel is allowed to set, preferably under quiescent conditions. This may be done by leaving the product to cool down at ambient conditions, but preferably cooling is applied, e.g. by placing the product in a refrigerator or cooling cabinet or by arranging quick replacement of the air around the product e.g. by means of a ventilator. It is not usually necessary for the gel to set to such a degree that equilibrium has been achieved, provided the gelled part of the product has set to such a degree that it has lost its mobility. Whether the gel is allowed to set further can be determined by the desired eating temperature and the wish to provide the product quickly for consumption, or instead to prepare it beforehand so that product is immediately available for consumption when desired.

The gel (A) may include ingredients like fats, cream, milk and/or sugar. In the preparation of gel (A), it is usually preferred to combine all ingredients early in the process before the gel (A) is beginning to set in its container. This facilitates obtaining good shelflife, e.g. by pasteurizing or sterilizing the composition before causing the gel (A) to set.

In a preferred embodiment, the combined gel composition (B) includes food ingredients to provide a composition suitable for the preparation of cheesecake or cheesecake like products. In this embodiment the combined gel composition (B) preferably includes cream, cream alternative, cream cheese, cream cheese alternative or a combination of two or more thereof. Preferably this is achieved by including cream, cream alternative, cream cheese, cream cheese alternative or a combination of two or more thereof in gel (A).

To provide good taste and flavor, the combined gel composition (B) includes preferably 1-50 wt%, more preferably 5-40 wt%, especially 10-35 wt% of fat. Fat indicates compositions consisting predominantly of triglycerides. They may be liquid, solid or semi-solid at ambient temperatures. Materials that can suitably be used as fat in the present method include milkfat, coconut fat, sunflower oil, soybean oil, Canola oil® and similar oils having a low erucic acid content derived from rapeseed varieties, olive oil, palm oil, fractions thereof and combinations of two or more thereof. In a preferred embodiment, part or all of the fat in composition (B) is provided by fat in gel (A). In this manner the fat can easily be caused to be present in the form of dispersed particles or droplets. The fat content of gel (A) is preferably 1-50 wt%, more preferably 5-40 wt%, especially 10-35 wt%. Part or all of the fat can suitably be incorporated in gel (A) or in composition (B) by including for example cream, cream cheese, cream alternative, cream cheese alternative or a combination thereof in gel (A) or composition (B), respectively. Preferably such materials are included in gel (A).

The gel (A) may further include minor components e.g. food acids, for example citric acid, and preservatives, for example potassium sorbate, and the like. Gel (A) may also include for example small amounts of thickeners, e.g. guar gum. Preferably, however, neither gel (A) nor composition (B) includes substantial amounts of thickeners such as starch, whether native starch or modified starch. More preferably the gel (A) and composition (B) contain 0-0.5 wt% starch. Most preferably they contain no starch at all. Similarly the use of thickeners that raise the viscosity at high temperature is preferably avoided. For example, in a preferred embodiment the gel (A) is transferred after the heating into the mould, after one or more food components have been stirred in, to allow the gel to set. This would be made more difficult if the gel (A) became very viscous upon the heating. Accordingly, the gel (A) preferably does not contain substantial amounts of hydroxypropylmethylcellulose or methylcellulose. More preferably the content of these cellulose derivatives in gel (A) is 0-0.1 wt%. Most preferably the gel (A) does not contain these cellulose derivatives at all. Similarly, these materials are preferably absent from composition (B).

Throughout this specification all parts, percentages and ratios are by weight unless otherwise indicated. Except in the operating and comparative examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Example 1

A professional chef prepared mini coffee cheesecakes using his usual recipe and preparation method as follows.

Biscuit base mix was heated on a stove for 5 minutes. Base was then placed into 8 small moulds.

Recipe for the gelled part of 8 mini cheesecakes:

| | |
|---|---|
| 15 g | gelatin |
| 2 | teaspoons liquid coffee concentrate |
| 150 g | soft brown sugar |
| 450 g | Philadelphia ® cream cheese |
| 300 ml | whipping cream |
| 300 ml | water |

The sugar and part of the water were put into a pan. The gelatin powder was sprinkled over the cold water and stirred in. The mixture was boiled and the remainder of the water was brought to the boil and added as well. This was stirred continuously. It took 11 minutes to dissolve the gelatin. This mixture was set aside and left to cool down for a few minutes.

The cream cheese and coffee concentrate were put in a food processor and mixed briefly. It was then transferred to a bowl. The cream was whipped in a Kenwood ™ mixer. The gelatin mixture was mixed into the cream cheese mix. Then the whipped cream was folded into the mixture. The resulting composition was poured onto the biscuit base in the moulds. The products were put in a refrigerator to set.

The total preparation time was 30 minutes. The minimum setting time to obtain products that could reasonably be consumed was 1 hour and 45 minutes. The chef commented that he usually left the product overnight to be sure that it had sufficiently set at the time of consumption.

The following composition was used for the preparation of a sheared gel to be used as gel (A):

| | |
|---|---|
| 54 | parts by weight (pbw) Philadelphia @ cream cheese ex Kraft Foods, UK |
| 1 | pbw agar |
| 19 | pbw Elmlea ® single (a cream alternative ex Van den Bergh Foods Ltd UK consisting of a blend of buttermilk and vegetable oils. The fat content is 13 %) |
| 26 | pbw water |

The sheared gel was prepared as follows. The cream and water were put in a beaker and mixed. The agar was cold dispersed in the mixture and stirred for about 5 minutes. The mixture and the cream cheese were put in a jacketed vessel provided with a stirrer and connected to a hot water supply. The lid was closed. The stirrer was operated at low speed and the heating was turned on. The temperature was raised to 90°C and the stirrer speed was increased to 350 rpm. Then the jacket of the vessel was connected to a cold water supply. Stirring was continued until the temperature of the composition had reduced to 15°C. The composition was then poured into sterile plastic bottles of 500 ml. The lid was screwed on and the bottles were stored in a refrigerator until further use.

The sheared gel contained 4 wt% dairy protein. The mono- and disaccharide content was 3 wt%. The fat content was 15 wt%. The water content was 76 wt%. The combined amount of water and fat present in the sheared gel was 91 wt%. After several days storage the sheared gel was still mobile. It had a viscous, easily spoonable consistency.

The sheared gel was used as gel (A) to make a coffee cheesecake with the following recipe:

| | |
|---|---|
| 500 g | sheared gel |
| 50 g | soft brown sugar |
| 2 | teaspoons coffee concentrate |

Moulds with biscuit base mix were prepared as described above. The sugar, coffee concentrate and sheared gel were put in a ceramic bowl and briefly mixed. The mixture was heated in a microwave at 650 watt for 5 minutes. It was briefly stirred two times during the heating. After 5 minutes the combined gel composition (B) had reached a temperature of 81°C. It was briefly whisked with a hand whisk. The mix was poured onto the biscuit base in the moulds and the cheesecakes were put in a refrigerator. The preparation time had been only 8 minutes. After 10 minutes in the refrigerator the gel had set and the cheesecakes were ready for consumption.

The chef judged the cheesecakes prepared from the sheared gel to have very good texture, taste and flavor. They were as good as the cheesecakes prepared with his traditional recipe. The preparation time, setting time, amount of work and the number of utensils used and to be cleaned afterwards were all markedly lower for the recipe based on the sheared gel.

### Example 2

### Sheared gel was prepared from the following composition:

| | |
|---|---|
| 54 | pbw "American style full fat soft cheese" ex Yoplait, UK. (This is a cream cheese alternative, suitable for vegetarians). |
| 0.5 | pbw agar |
| 19 | pbw of a low fat cream alternative consisting of a blend of skimmed milk and vegetable fat. The fat content was 10 %.) |
| 25 | pbw water |
| 1 | pbw K-sorbate solution (10% solution) |
| 0.11 | pbw citric acid. |

The sheared gel was prepared as follows. The skimmed milk / vegetable oil blend and cream cheese alternative were placed in a mixer with the water, sorbate and citric acid. The mixer was turned on. The agar was dispersed into the mixture. The resulting mixture was fed into a scraped surface heat exchanger (SSHE) and pre-heated to 85°C. From here the product was fed into a single stage homogeniser at 500 psi. Next it was pasteurized in another SSHE at 110°C for 12 sec. The flow rate of the process was 120 1/hr. The product was cooled with water to 45 °C in a SSHE and then to 14 °C by a glycol cooled SSHE. It was stored in a sealed sterile tank before being aseptically packed using a Metal box SL1 aseptic pot filler. The product was filled into 150 ml plastic pots sealed with a foil lid and stamped with the product name and the date of manufacture.

The sheared gel contained 3 wt% protein, 4 wt% carbohydrate, 17 wt% fat and 74 wt% water.

A leaflet was prepared with Product Handling Guidelines for the users. The user was instructed to heat the product to a minimum of 75 °C for one minute, to activate the setting process. Ingredients could be added before or after the heating process. For cold serve products it was recommended to chill for 15 minutes before serving. Hot serve products would also set in 15 minutes and could be hot-held.

### Example 3

A smoked fish based gelled product was prepared from the following recipe.

| | |
|---|---|
| 250 g | QimiQ ® (QimiQ contains 1 wt% gelatin and otherwise only contains dairy cream and skimmed milk. QimiQ ® was obtained from Hama Foodservice, Austria.) |
| 125 g | smoked mackerel |
| 125 g | dairy cream |
| ½ | teaspoon of finely chopped dill tips |
| | lemon juice |
| | white pepper |
| | salt |
| | mustard |

The QimiQ was whisked till smooth. The smoked fish was finely chopped and added together with the seasoning and dill tips.

The cream was whipped and folded into the mixture. The mixture was then filled into a mould and put in the refrigerator. The preparation time was 10 minutes (excluding cutting the fish and the dill tips).

A similar product was made with the present method using the sheared gel described in example 1 as gel (A). In the recipe 375 g of the sheared gel was used instead of the QimiQ and the cream. The sheared gel did not need to be whisked. After all components had been combined in a bowl, the bowl was put in a microwave and heated for 3 minutes at full capacity. The temperature reached was 72°C. The composition was then poured in the mould and placed in the refrigerator. The preparation time was 5 minutes (excluding cutting the fish and the dill tips) .

After the products had been allowed to set for 60 minutes, they were removed from the refrigerator. The product based on the sheared gel had fully set. It could easily be de-moulded and retained the shape of the mould. It could be cut and its texture was smooth and creamy.

The product prepared with QimiQ had not yet set and could not be de-moulded. The volume of product obtained from the same weight of recipe was less, suggesting that it had retained less air during the preparation.

### Example 4

A chocolate based gelled product was prepared from the following recipe:

| | |
|---|---|
| 560 g | sheared gel as described in example 1 (used as gel (A)) |
| 100 g | chocolate chips |
| 3 | dessert spoons crystal sugar |
| 1 | teaspoon rum |

The components were combined, briefly mixed and heated in a microwave at full power for 5 minutes. The composition reached a temperature of 80°C. The chocolate chips had molten. The composition was then briefly mixed through and poured into 4 small moulds and put in the refrigerator for 60 minutes.

For comparison a product was made from the same recipe except that the sheared gel was replaced by 250 g QimiQ ®, 62 g milk and 250 g dairy cream. The preparation process used was:
- Whisk QimiQ smooth.
- Melt the chocolate chips. Add the milk, crystal sugar and rum and mix well.
- Whip the cream and fold it in.
- Put the mix in 4 small moulds and allow the composition to become firm in the refrigerator.

The time needed to prepare the composition based on the sheared gel (A) was considerably shorter than for the reference product. The number of utensils used, which subsequently needed to be cleaned, was smaller for the sheared gel based product. After 20 minutes in the refrigerator the sheared gel based product was fully set. It could be easily de-moulded and it retained the shape of the container. It could be cut and its texture was smooth and creamy. The reference product was nonhomogeneous and lumpy. It had not yet set and could not be de-moulded in one piece. Even after 2 hours in the refrigerator the product could not be de-moulded.

### Example 5

The foil lid of a container with sheared gel prepared as described in example 2 was punctured in 2 places and the container was heated in a microwave oven at 600 watt for 1 minute and 20 seconds. The foil was removed. The temperature of the sheared gel had reached about 90°C. The heated gel composition was transferred to a kitchen bowl and about 50 g of pieces of smoked salmon and 3 g of finely cut dill were stirred in. The mixture was transferred with a spoon into small puff pastry shells. The shells were put in a refrigerator for 25 minutes. The resulting gelled food products were served as snacks.

The gelled part constituted about half of the volume of the overall gelled food product, the puff pastry shells constituting the other half. The sheared gel composition constituted about 70 wt% of the gelled part of the gelled food product, the salmon and the dill constituting the other 30 wt%.

### Example 6

The foil lid of a container with sheared gel as described in example 2 was punctured in 2 places. The container was heated in a microwave oven at 600 watt for 1 minute and 10 seconds. The closing foil was removed. Two table spoons of Tia Maria ® coffee liqueur were stirred into the heated gel composition. The container was covered with alufoil and put in the refrigerator for 3 hours. It was then used as dessert.

The gelled food product consisted entirely of the gelled part. The sheared gel composition constituted about 80 wt% of the gelled part of gelled food product.

### Example 7

Trials were done using different types and amounts of gelling agent and salt.

### Sheared gel compositions

| | |
|---|---|
| 53.7 pbw | full fat soft cheese (28% fat) as described in example 2 |
| 18.8 pbw | Elmlea ® single (see example 1) |
| 25.82 pbw | water |
| 0.01 pbw | citric acid |
| 0.1 pbw | K-sorbate (10% solution) gelling agent salt |

### The type and amount of gelling agent and salt were as follows

| | |
|---|---|
| Ex 7a: | 0.5 pbw Kappa carrageenan 0.3 pbw NaCl (10% solution in water) |
| Ex 7b: | 0.6 pbw iota carrageenan 0.5 pbw CaCl₂.2H₂O (10% solution) |
| Ex 7c: | 0.6 pbw gellan 0.5 pbw CaCl₂.2H₂O (10% solution) |
| Ex 7d: | 0.6 pbw Kappa carrageenan with 25% furcelleran 0.6 pbw CaCl₂.2H₂O (10% solution) |

### Sheared gel preparation:

The K-sorbate, water, Elmlea ® and citric acid were placed in a jacketed heating vessel. The gelling agent was added slowly with stirring and stirring was continued for 5 minutes. The soft cheese was added and the mix heated to 50°C. Then the salt was added. The mixture was heated to 90°C, kept at that temperature for 10 minutes and then cooled down over 2 hours to below 15°C. Stirring was continued through the whole preparation. The sheared gel was stored at 5°C.

Preparation of raspberry mousse: 125 g of the sheared gel was heated in a microwave oven to 80°C. After the heating 20 g raspberry puree and 15 g sugar were stirred in. The mixture was poured in a small bowl and placed in a refrigerator at 5°C to allow it to set. The sheared gels obtained were relatively thick. The raspberry mousse was somewhat salty. Overall, the sheared gels were not as convenient to use as the sheared gel based on agar. The taste and texture of the gelled food products obtained were not as good as those obtained with sheared gel based on agar.

### Example 8

A series of trials were done with 2 different types of soft fresh cheese. Their composition was as follows

| soft fresh cheese | Milklink ®* | Blackmore Vale ®** | |
|---|---|---|---|
| composition (wt%) water fat protein carbohydrate | 54 31 6.4 6.0 | 60 31 8.6 trace | |

| | | | |
|---|---|---|---|
| * Milklink ® full fat soft cheese, a soft fresh cheese, is available from Milklink Ltd, Staplemead Creamery, Frome, Somerset UK | | | |
| ** Blackmore Vale ® American style full fat soft cheese, a soft fresh cheese, is available from Blackmore Vale Farm Cream Ltd, Shaftesbury, Dorset, UK. | | | |

Sheared gels were prepared using the following recipes, expressed in pbw

| Example | 8A | 8B | 8C | 8D | 8E |
|---|---|---|---|---|---|
| Milklink ® | 51 | 51 | 48 | 54 | - |
| Blackmore Vale ® | - | - | - | - | 51 |
| Skimmed milk | 18.9 | 18.9 | 18.9 | 18.9 | 18.9 |
| Dairy cream (48% fat) | - | 2.44 | - | - | 2.44 |
| Water | 29.5 | 27.05 | 32.5 | 26.5 | 27.05 |
| Agar | 0.5 | 0.5 | 0.5 | 0.5 | 0.5 |
| Citric acid | 0.085 | 0.11 | 0.085 | 0.09 | 0.14 |

The sheared gels were prepared as described in example 7, mutatis mutandis. All products obtained had good consistency. They were convenient to use. Their composition was as follows expressed as wt%)

| Example | 8A | 8B | 8C | 8D | 8E |
|---|---|---|---|---|---|
| Water | 74 | 73 | 76 | 73 | 76 |
| Protein | 3.9 | 3.9 | 3.7 | 4.1 | 5.0 |
| Fat | 16 | 17 | 15 | 17 | 17 |
| Carbohydrate | 4.5 | 4.5 | 4.3 | 4.6 | 1.5 |

These sheared gels can suitably be used to prepare gelled food products, for example raspberry mousse, using the recipe and preparation method described in example 7.

## Claims

1. Method for preparing a gelled food product comprising the steps of
(a) opening a closed container of thermo-reversible gel (A) that is based on polysaccharide gelling agent,
(b) heating gel (A) to a temperature of at least 60°C,
(c) combining the gel (A) with at least one taste or flavour imparting food component before, during or after the heating in step (b), to provide a combined gel composition (B) that comprises at least 1 wt% protein, such that the gel (A) constitutes 50-98 wt% of the composition (B), and
(d) allowing the combined gel composition (B) to set in a mould.

2. Method according to claim 1 wherein the gel (A) has a pH below 6.

3. Method according to claim 1 or claim 2 wherein the gel (A) is substantially free from kappa and iota carrageenan.

4. Method according to any one of claims 1-3 wherein the gel (A) is heated to a temperature of 60-95°C.

5. Method according to any one of claims 1-4 wherein the combined gel composition (B) comprises a combined amount of fat and water of 60-99 wt%.

6. Method according to any one of claims 1-5 wherein the mould is an edible mould or a holding device that contains an edible base.

7. Method according to any one of claims 1-6 wherein during the setting of the combined gel composition (B), cooling is applied.

8. Method according to any one of claims 1-7 wherein the gel (A) comprises a thermo-reversible polysaccharide gelling agent selected from the group consisting of agar, gellan, agarose, furcelleran, a combination of xanthan gum and locust bean gum, a combination of xanthan gum and konjac flour and combinations of two or more thereof.

9. Method according to any one of claims 1-8 wherein gel (A) comprises at least 1 wt% protein

10. Method according to any one of claims 1-9 wherein the protein is globular protein.

11. Method according to claim 10 wherein the globular protein is dairy protein, vegetable protein or a combination thereof.

12. Method according to any one of claims 1-11 wherein the combined gel composition (B) comprises 1-50 wt% fat.

13. Method according to any one of claims 1-12 wherein the combined gel composition (B) comprises cream, cream alternative, cream cheese, cream cheese alternative or a combination of two or more thereof.

14. Method according to claims 13 wherein the gel (A) comprises cream, cream alternative, cream cheese, cream cheese alternative or a combination of two or more thereof.

15. Method according to any one of claims 1-14 wherein the gel (A) comprises a combined amount of fat and water of 60-99 wt%.

16. Method according to any one of claims 1-15 wherein the gel (A) comprises 1-50 wt% fat.
